# FASCICULE DE BREVET EUROPEEN

(11) **EP 2 149 760 B1**
(45) Date de publication et mention de la délivrance du brevet: **29.09.2021**
(21) Numéro de dépôt: 09009810.4
(22) Date de dépôt: 29.07.2009
(51) Int. Cl.: F24F 5/00, F24F 3/00, H02P 27/04

(54) **Systéme d`alimentation et de gestion d`énergie électrique pour un dispositif thermodynamique**
System zur Stromversorgung und -steuerung für eine thermodynamische Vorrichtung
System for supplying and managing electric energy for a thermodynamic device

(30) Priorité: 29.07.2008 FR 0804315
(43) Date de publication de la demande: 03.02.2010
(73) Titulaire: COMECA POWER, 72100 Le Mans (FR)
(72) Inventeur: Milly, Roger, 38290 Satolas et Bonce (FR)
(74) Mandataire: Gevers & Orès

(56) Documents cités:
- WO-A1-2004/045044
- DE-A1- 4 111 319
- DE-A1- 4 433 428
- DE-A1-102006 051 421
- JP-A- 2005 168 101
- US-A1- 2008 116 830

## Description

### Domaine de l'Invention

La présente invention concerne un système d'alimentation et de gestion d'énergie électrique pour un dispositif thermodynamique, notamment du type pompe à chaleur, plus particulièrement à partir de sources d'énergie décentralisées sans production locale de CO₂.

### Etat de la technique

Un appareil de traitement ou de conditionnement de l'air d'une pièce effectue un échange thermique avec un fluide réfrigérant. Selon son mode de fonctionnement, il peut travailler en mode climatisation ou en mode chauffage, voire de manière réversible en mode automatique, en fonction des données préétablies, telles la valeur de consigne et les températures extérieure et intérieure mesurées.

On connaît dans l'état de la technique de tels appareils qui utilisent l'énergie solaire comme source d'énergie. Le document EP 0 576 280 décrit un procédé et un dispositif de commande pour un système de climatisation ayant plusieurs climatiseurs alimentés en courant électrique continu obtenu par redressement d'une alimentation en courant alternatif et combiné à l'alimentation en courant continu générée par des panneaux photovoltaïques. L'alimentation du système de climatiseurs se fait également à partir du réseau afin de palier au manque d'ensoleillement et donc de la faible puissance générée par les cellules solaires. Toutefois, ce système n'utilise l'énergie solaire que pour l'alimentation du système de climatisation. Par ailleurs, l'unité extérieure est connectée par un bus d'alimentation en courant continu aux cellules solaires et par des lignes d'alimentation et de puissance à l'unité intérieure qui, elle, est connectée au réseau. De ce fait, afin de pouvoir commander le compresseur et les ventilateurs à partir de sources d'énergie différentes, chaque unité doit comprendre ses propres moyens de commande et de contrôle, ce qui rend complexe la construction du système.

Le document DE 44 33 428 propose un autre système d'alimentation pour une unité de conditionnement d'air utilisant l'énergie photovoltaïque. Un module électronique est connecté à un élément photovoltaïque et également au réseau. Le module électronique est contrôlé par un microcontrôleur, les deux étant reliés à un convertisseur de fréquence qui alimente le compresseur d'un climatiseur. La capacité réfrigérante du compresseur dépend de la fréquence fournie par le convertisseur qui est régulée par le microcontrôleur en fonction de paramètres reçus en entrée en provenance : de sondes de température, internes ou externes, ou d'une programmation à distance, etc.. En fonction du mode de fonctionnement choisi du climatiseur, le surplus d'énergie, notamment après l'arrêt du climatiseur, est dirigé vers le réseau. Toutefois, le circuit électrique décrit dans ce document n'est prévu que pour commander en variation de fréquence un compresseur d'une installation frigorifique, sans possibilité de régulation de différents autres composants d'une pompe à chaleur ou qui sont raccordés à celle-ci.

Offrant un meilleur rendement énergétique que le système du document précédent, il reste toutefois tributaire à la puissance générée par les panneaux photovoltaïques ou, en cas de faible puissance de ceci, il doit basculer sur le réseau.

Or, il est connu que les besoins en électricité ne correspondent pas toujours aux heures d'ensoleillement et qu'ils nécessitent une puissance régulière. Une solution serait d'équiper le système de batteries permettant de stocker l'énergie et de la restituer au moment approprié, un régulateur étant prévu pour protéger les batteries en cas de surcharge ou de décharge. Toutefois, en fonction de la situation géographique ou du climat pris en compte pour l'alimentation d'un bâtiment résidentiel ou tertiaire, d'autres sources d'énergies renouvelables sont disponibles comme sources d'alimentation en énergie électrique. D'une manière générale, les nouvelles technologies de génération et d'exploitation d'énergies renouvelables se sont beaucoup développées récemment et, de ce fait, l'énergie solaire, éolienne et celle de l'hydrogène constituent un important potentiel en tant que système décentralisée de production d'énergie sans émission de CO₂. Il est donc souhaitable de pouvoir utiliser ces sources d'énergie, malgré leur production quelque peu irrégulière, dans des dispositifs thermodynamiques.

Le document WO 2004 045044 montre un système d'alimentation et de gestion électrique correspondant au préambule de la revendication 1.

### Objet de l'invention

Le but de l'invention est un système d'alimentation et de gestion d'énergie électrique pour un dispositif thermodynamique, notamment d'une pompe à chaleur et de ses périphériques, qui soit apte à fonctionner dans des environnements diversifiés, tout en ayant un bon rendement énergétique, pouvant utiliser plusieurs sources d'énergie électrique, tout en étant de construction compacte et être facile à installer.

Un autre but de l'invention est un module électronique de commande pour un système d'alimentation en énergie électrique permettant une régulation optimale des composants d'un dispositif thermodynamique et une alimentation lui permettant de fonctionner avec un bon rendement, dans des environnements diversifiés.

Un autre but de l'invention est un module électronique de commande pour un dispositif thermodynamique apte à fonctionner dans des environnements diversifiés, tout en pouvant être installé facilement.Ces buts sont atteints avec un système d'alimentation et de gestion d'énergie électrique pour un_dispositif thermodynamique à partir de sources d'énergie différentes comportant un ensemble électronique comprenant un convertisseur d'énergie relié auxdites sources d'énergie et à un organe de commande du dispositif thermodynamique, du fait que l'organe de commande est intégré au convertisseur d'énergie et forment ensemble un module électronique de commande relié au dispositif thermodynamique et que ledit module électronique de commande reçoit une alimentation d'au moins une source d'énergie décentralisée sans production locale de CO₂.

Par sources d'énergie décentralisées sans production locale de CO₂ différentes, on comprend une alimentation en énergie, indépendante d'un réseau d'électricité, alimentation qui se fait à partir de deux sources différentes, par exemple l'énergie solaire et l'énergie éolienne ou l'énergie solaire et une pile à combustibles, etc.

L'utilisation de ces systèmes permet de compenser la production d'électricité d'autres installations produisant des émissions nocives ou encore réduire les coûts de production, tout en permettant de bénéficier d'un système autonome en énergie. Ainsi, on peut obtenir un système autonome d'alimentation en énergie électrique, à partir de sources d'énergie décentralisées sans production locale de CO₂, sans subir l'inconvénient d'environnement géographique ou de variation de son potentiel en fonction du climat.

On entend ici par « source d'énergie décentralisée sans production locale de CO₂ » toute source d'énergie qui ne produit pas de CO₂ au lieu de la génération du courant électrique (sans prendre en compte, dans le cadre d'un écobilan global (i.e. non-local), une éventuelle production de CO₂ lors de la fabrication des dispositifs eux-mêmes ou de leurs consommables), et qui est destinée à être installée proche du lieu de consommation de l'énergie qu'elle génère, sans passer par le réseau conventionnel de distribution de courant alternatif. A ce titre, une chaudière à bois n'est pas une source d'énergie sans production locale de CO₂, bien que le bois en tant que combustible renouvelable ait un écobilan de CO₂ très favorable ; une pile à combustible est une source d'énergie sans production locale de CO₂, bien que son écobilan doive prendre en compte l'éventuelle production de CO₂ entraînée par la fabrication de ses consommables (hydrogène notamment). Dans le cadre de la présente invention, les sources d'énergie décentralisées sans production locale de CO₂ sont de préférence choisies parmi : les panneaux photovoltaïques, les éoliennes, les piles à combustible, les mini turbines hydrauliques.

Ces sources d'énergies sans production locale de CO₂ s'adaptent bien à l'alimentation en énergie électrique d'habitation individuelle ou collective. Par exemple, les mini turbines hydrauliques peuvent avantageusement être utilisées pour fournir l'énergie requise aux habitations bénéficiant d'un cours d'eau, même de faible profondeur ou faible débit ou en étant placées sur une faible chute. Ainsi, une mini turbine hydraulique convertit l'énergie du mouvement de l'eau en énergie mécanique utile, laquelle actionne une génératrice, qui à son tour produit de l'électricité. Il en est de même avec les panneaux photovoltaïques dans les zones bénéficiant d'un bon ensoleillement ou des éoliennes dans des zones ventées, les piles à combustibles se prêtant, elles à toute zone ne bénéficiant pas des conditions géographiques ou de climat précédemment énoncées. Ainsi, à partir de ces sources, on peut produire de l'énergie électrique permettant de pourvoir aux besoins de base liés aux usages d'éclairage, de fonctionnement de dispositifs électroniques, d'ordinateurs, de petits appareils ménagers, d'outils de bricolage, de machines à laver, de réfrigérateurs, de chauffage de l'eau ou de locaux, et ceci de manière indépendante du réseau.

Selon l'invention, le système d'alimentation et de gestion d'énergie électrique comporte les caractéristiques de la revendication 1. Ceci permet de pouvoir installer facilement le dispositif thermodynamique ou l'installation le comportant, le dispositif thermodynamique étant, lui, réalisé de manière simplifiée en étant exempt de toute partie électronique de puissance ou de commande, en comportant seulement des câbles d'alimentation le reliant au module électronique de commande de l'invention. Ceci permet de réaliser l'installation en faisant intervenir un seul corps de métiers, en l'occurrence l'installateur de dispositifs thermodynamiques, et d'éviter les erreurs d'installation, notamment des parties électroniques. Par ailleurs, une telle solution de module électronique de commande unique qui centralise toutes les fonctions électroniques du système est réalisé de manière intégrée, ce qui permet de réduire l'encombrement des composants de l'installation.

Une telle mise en place d'installation comportant une pompe à chaleur et ses périphériques en étant exempts de parties électroniques de puissance ou de commande, peut être alors faite par un installateur de dispositifs de chauffage ou de climatisation qui n'est pas hautement qualifié en électronique. Ceci permet, avec un seul module électronique de commande, éventuellement programmé pour être adapté au fonctionnement avec une installation spécifique, de réaliser l'alimentation à partir d'une source d'énergie décentralisée, sans production locale de CO₂, ainsi que la commande de l'installation, de manière simplifiée et fiable.

Avantageusement, le système d'alimentation et de gestion d'énergie électrique pour un dispositif thermodynamique qui convertit l'énergie électrique en provenance d'une source d'énergie décentralisée sans émission de CO₂ en énergie électrique assure l'alimentation à fréquence fixe ou variable ainsi que la régulation et la commande d'une pompe à chaleur et de ses périphériques. Par périphériques d'une pompe à chaleur on comprend tout dispositif thermodynamique que l'on puisse associer à une pompe à chaleur, notamment des vannes, des pompes, des ventilo-convecteurs, des dispositifs de stockage d'énergie, etc.

Ledit organe de commande comporte au moins une sortie pour piloter en variation de fréquence au moins un compresseur ou un ventilateur d'un dispositif thermodynamique.

Ainsi, un tel système d'alimentation en énergie électrique en provenance de sources d'énergie décentralisées sans production locale de CO₂ peut avantageusement alimenter une pompe à chaleur. Une telle pompe à chaleur fonctionnant à l'électricité peut réduire considérablement la consommation totale d'énergie électrique et ce jusqu'à 70% par rapport à un chauffage électrique direct. Lorsqu'elle peut s'installer dans un contexte approprié de géothermie ou d'aérothermie, la pompe à chaleur peut produire d'une manière fiable de l'eau chaude à environ 50°C, et même 65°C pour les versions plus évoluées, appelées haute température, ou pouvant aller même jusqu'à 70°C pour certaines pompes à chaleur utilisant du CO₂ comme fluide frigorigène. La sortie en variation de fréquence permet de contrôler la vitesse de rotation du compresseur de la pompe à chaleur et d'adapter sa puissance à la charge thermique ou frigorifique d'un local. Le pilotage du compresseur par un variateur de fréquence assure un ajustement plus précis et plus stable par rapport à la consigne, ainsi qu'une adaptation plus rapide de la vitesse du moteur d'actionnement du compresseur à une nouvelle consigne. Par ailleurs, un pilotage par variation de vitesse permet de supprimer les surintensités de démarrage, d'allonger la durée de vie du moteur et d'obtenir des économies d'énergie. Un tel pilotage en variation de fréquence peut également être utilisé pour actionner un ventilateur ou ventilo-convecteur d'une pompe à chaleur.

De préférence, ledit organe de commande comprend un système de régulation d'au moins un poste utilisateur choisi parmi : un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

Un tel poste utilisateur peut être une pompe à chaleur ainsi qu'un de ses périphériques. Lorsqu'elle est associée à des panneaux solaires à eau chaude, la pompe à chaleur devient un des meilleurs systèmes de chauffage mixte utilisant l'électricité. Par ailleurs, pour pallier aux faiblesses d'une pompe à chaleur, notamment à sa limitation en température de sortie, ou à son mauvais rendement en hiver, lorsque la source naturelle dans laquelle est puisée la chaleur est très froide (la température extérieure pouvant être par exemple d'environ -10°C), on l'associe à d'autres dispositifs thermiques ou thermodynamiques. Par exemple, l'association d'une pompe à chaleur en relève de chaudière permet d'utiliser la chaudière en priorité pendant les jours les plus froids et la pompe à chaleur le reste du temps. Pour palier à ceci, des résistances électriques d'appoint doivent parfois être utilisées. L'organe de commande de l'invention assure d'une manière globale la régulation de ces postes utilisateurs en fonction de données d'entrée reçues par l'ensemble électronique. Lorsque le dispositif thermodynamique ne consomme pas toute l'énergie électrique fournie par le système d'alimentation, l'organe de commande peut alors commander l'envoi de l'énergie supplémentaire vers une zone de stockage de l'énergie.

Un module électronique de commande pour un système d'alimentation et de gestion d'énergie électrique pour un dispositif thermodynamique comprend une carte électronique à circuit électronique de puissance permettant à l'organe de commande d'être intégré au convertisseur d'énergie et qui fournit l'alimentation à au moins un dispositif électrique de sortie choisi parmi : un réseau électrique, un compresseur, un ventilateur, une résistance de chauffage de réservoir d'eau ou une résistance de chauffage complémentaire à partir d'au moins une source d'énergie décentralisée sans production locale de CO₂.

Avantageusement, le module électronique de commande comporte au moins une sortie pour piloter en variation de fréquence au moins un compresseur ou un ventilateur d'un dispositif thermodynamique.

De préférence, le module électronique de commande assure la régulation d'au moins un poste utilisateur choisi parmi : un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

De préférence, le module électronique de commande assure la régulation d'un système de gestion comportant un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

Une carte électronique pour un le module électronique de commande comprend un circuit électronique de puissance pour piloter en variation de fréquence, à partir d'un bus d'énergie au moins un compresseur ou un ventilateur d'un dispositif thermodynamique.

Avantageusement, la carte électronique comprend un circuit électronique de commande pour la régulation d'au moins un poste utilisateur choisi parmi un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

De préférence, la carte électronique comprend un microprocesseur puissant qui gère la régulation d'un système complexe comportant une pompe à chaleur et ses périphériques, notamment un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

### Description des figures

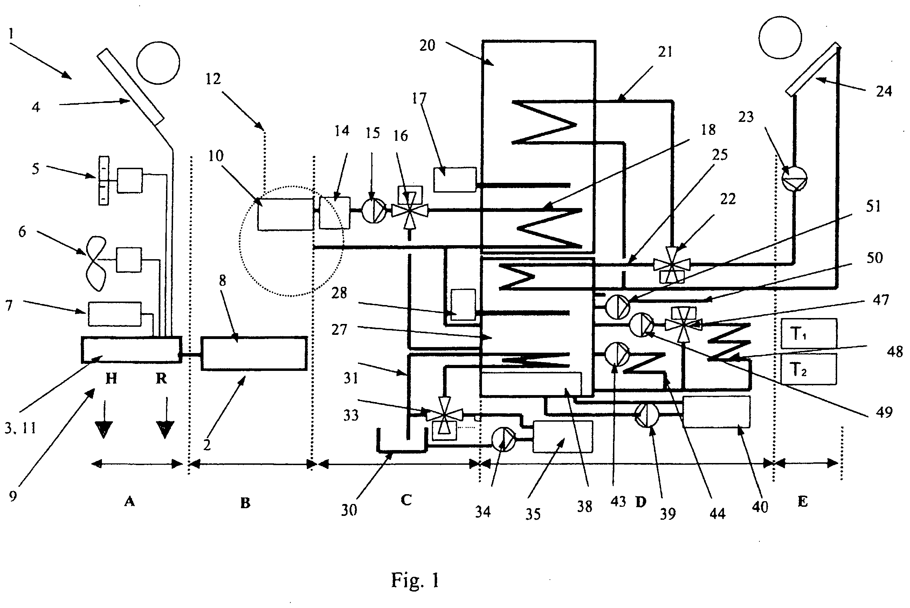

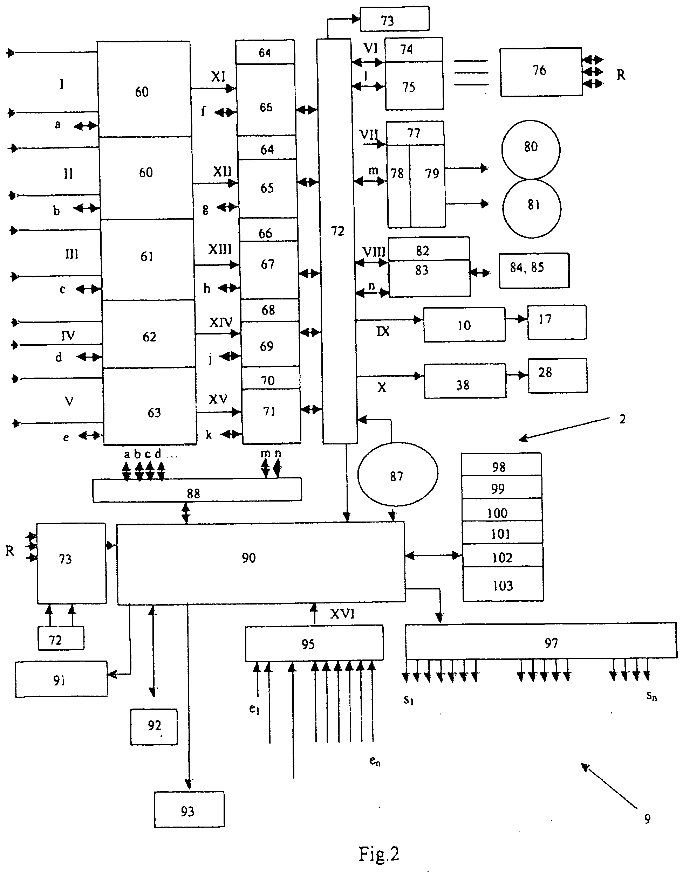

La figure 1 illustre de manière schématique un système d'alimentation et de gestion d'énergie électrique selon l'invention relié à un dispositif thermodynamique ; la figure 2 est un schéma bloc des circuits de puissance et de commande de l'ensemble électronique.

### Liste des repères :

| | | | |
|---|---|---|---|
| 1 | système d'alimentation et de gestion de l'énergie | | |
| 2 | dispositif thermodynamique | | |
| 3 | convertisseur d'énergie | | |
| 4 | panneau photovoltaïque | | |
| 5 | mini turbine hydraulique | 6 | éolienne |
| 7 | pile à combustible | 8 | pompe à chaleur |
| 9 | module électronique de commande | 10 | échangeur de chaleur réfrigérant/eau |
| 11 | organe de commande | 12 | sonde extérieure |
| 14 | résistance électrique | 15 | pompe |
| 16 | vanne à trois voies directionnelle | 17 | résistance électrique eau chaude sanitaire |
| 18 | échangeur eau chaude sanitaire | 20 | ballon d'eau chaude sanitaire |
| 21 | serpentin eau chaude sanitaire | 22 | vanne à trois voies |
| 23 | pompe | 24 | panneau solaire thermique |
| 25 | serpentin chauffage solaire | 27 | ballon de désaccouplage |
| 28 | résistance électrique ballon de désaccouplage | | |
| 30 | piscine | | |
| 31 | échangeur piscine | 33 | vanne à trois voies |
| 34 | pompe | 35 | filtre |
| 38 | dispositif de stockage d'énergie par changement de phase | | |
| 39 | pompe | | |
| 40 | chaudière | 43 | pompe |
| 44 | circuit chauffage et/ou climatisation | 47 | vanne à trois voies |
| 48 | terminal de chauffage et/ou climatisation | 49 | pompe |
| 50 | circuit de climatisation | 51 | pompe |
| 60 | interface | 61 | interface |
| 62 | interface | 63 | interface |
| 64 | processeur de signal numérique | 65 | convertisseur |
| 66 | processeur de signal numérique | 67 | convertisseur |
| 68 | processeur de signal numérique | 69 | convertisseur |
| 70 | processeur de signal numérique | 71 | convertisseur |
| 72 | bus d'énergie | 73 | alimentation auxiliaire système |
| 74 | processeur de signal numérique | 75 | convertisseur réversible |
| 76 | module de protection | 77 | processeur de signal numérique |
| 78 | onduleur | 79 | filtre |
| 80 | compresseur | 81 | ventilateur |
| 82 | processeur de signal numérique | | |
| 83 | chargeur/déchargeur | 84 | batteries |
| 85 | super capacités | 87 | module |
| 88 | bus de commande | 90 | système microcontrôleur |
| 91 | carte mémoire | 92 | ordinateur |
| 93 | afficheur | 95 | module d'entrées analogiques |
| 97 | module de sorties | 98 | réseau de téléphonie mobile de type 3G |
| 99 | réseau des courants porteurs en ligne CPL | | |
| 100 | réseau téléphonique commuté RTC | | |
| 101 | réseau WIFI | 102 | réseau de téléphonie mobile de type GPRS |
| 103 | réseau de type ETHERNET | | |
| I signal en courant reçu d'un premier panneau photovoltaïque | | | |
| II signal en courant reçu d'un deuxième panneau photovoltaïque | | | |
| III signal en tension reçu d'une éolienne | | | |
| IV signal en tension reçu d'une pile à combustible | | | |
| V signal en tension reçu d'une mini turbine hydraulique | | | |
| VI signal sortant vers le réseau | | | |
| VII signal sortant vers partie onduleur | | | |
| VIII signal sortant vers zone stockage énergie | | | |
| IX signal sortant vers résistance de chauffe | | | |
| X signal sortant vers résistance de chauffe | | | |
| XI signal transformé par l'interface 60 | | | |
| XII signal transformé par l'interface 60 | | | |
| XIII signal sortant de l'interface 61 | | | |
| XIV signal sortant de l'interface 62 | | | |
| XV signal sortant de l'interface 63 | | | |
| XVI signal en provenance d'un module d'entrées analogiques 95 | | | |
| a signal digital bidirectionnel reliant l'interface 60 au bus de commande 88 | | | |
| b signal digital bidirectionnel reliant l'interface 60 au bus de commande 88 | | | |
| c signal digital bidirectionnel reliant l'interface 61 au bus de commande 88 | | | |
| d signal digital bidirectionnel reliant l'interface 62 au bus de commande 88 | | | |
| e signal digital bidirectionnel reliant l'interface 63 au bus de commande 88 | | | |
| f signal digital bidirectionnel reliant le convertisseur 65 au bus de commande 88 | | | |
| g signal digital bidirectionnel reliant le convertisseur 65 au bus de commande 88 | | | |
| h signal digital bidirectionnel reliant le convertisseur 67 au bus de commande 88 | | | |
| j signal digital bidirectionnel reliant le convertisseur 69 au bus de commande 88 | | | |
| k signal digital bidirectionnel reliant le convertisseur 71 au bus de commande 88 | | | |
| l signal digital bidirectionnel reliant le convertisseur réversible 75 au bus de commande 88 | | | |
| m signal digital bidirectionnel reliant l'onduleur 78 au bus de commande 88 | | | |
| n signal digital bidirectionnel reliant le chargeur/déchargeur 83 au bus de commande 88 | | | |
| A production d'énergie électrique dite verte | | | |
| B production thermodynamique, notamment de l'eau chaude ou de l'eau froide | | | |
| C complément électrique | | | |
| D réseau | | | |
| E production solaire complémentaire en eau chaude | | | |
| H acheminement de l'énergie vers l'habitation | | | |
| R acheminement de l'énergie vers le réseau d'électricité | | | |
| T₁ température ambiance dans une première zone d'habitation | | | |
| T₂ température ambiance dans une deuxième zone d'habitation | | | |

### Description de l'invention

Tel que représenté à la figure 1, le système d'alimentation 1 et de gestion d'énergie électrique de l'invention est relié à un dispositif thermodynamique 2 qui, dans l'exemple décrit, est constitué par une pompe à chaleur 8.

La pompe à chaleur 8 est un dispositif thermodynamique constitué d'un circuit fermé et étanche dans lequel circule un fluide frigorigène à l'état liquide ou gazeux selon les organes qu'il traverse. Le cycle thermodynamique du fluide circulant dans une pompe à chaleur subit 4 étapes de transformation. De manière généralement connue, ses organes sont constitués d'un évaporateur, d'un compresseur, d'un condenseur et d'un détendeur (non représentés sur les dessins).

Dans le compresseur, le gaz est compressé et passe donc d'une basse pression à une pression plus élevée grâce à l'énergie mécanique du compresseur. Cette transformation peut se faire à température constante. Au refoulement du compresseur le fluide frigorifique est à l'état gazeux, à température élevée et à haute pression.

Dans le condenseur le fluide se condense, il passe de l'état gazeux à l'état liquide, à pression constante, en cédant des calories au milieu avec lequel il échange de la chaleur (avec l'habitat en hiver et avec l'extérieur en été).

A la sortie du condenseur le fluide est à l'état liquide, en étant toujours en haute pression mais à une température plus faible, de l'ordre de 4 à 15 °C, voire 20°C, de moins et entre dans le détendeur. Dans le détendeur, le fluide passe d'une haute pression à une pression basse et de l'état liquide à un mélange liquide et gazeux (à enthalpie constante s'il n'y a pas d'échange de chaleur avec le milieu extérieur). La température passe d'une température élevée à une température basse.

A l'entrée de l'évaporateur le fluide est à la fois à l'état liquide et gazeux et à basse pression. Dans l'évaporateur le fluide s'évapore et passe de l'état liquide et gazeux à l'état de vapeur (à pression constante) en prenant des calories au milieu avec lequel il échange de la chaleur. A la sortie de l'évaporateur et à l'entrée du compresseur le fluide frigorifique est dit surchauffé (il est à la même pression que dans l'évaporateur mais à une température plus importante, de l'ordre de 4 à 7 °C de plus).

Le fluide est ensuite aspiré par le compresseur où il est comprimé d'une pression basse vers une pression élevée pour un nouveau cycle.

La pompe à chaleur peut être du type géothermique (elle prélève des calories du sous-sol du terrain) ou aérothermique, en quel cas les calories sont prélevées de l'air environnant. La pompe à chaleur augmente son niveau de température et restitue une chaleur plus élevée dans l'habitation. Le chauffage est assuré soit par de l'air chaud pulsé, soit par le biais d'un circuit hydraulique alimentant un plancher chauffant, des radiateurs ou des ventilo-convecteurs.

Dans l'exemple représenté, la pompe à chaleur 8 permet, dans une de ses fonctionnalités, de chauffer l'eau chaude sanitaire dont une habitation a besoin. Pour ceci, l'échangeur de chaleur réfrigérant/eau 10 de la pompe à chaleur 8 cède des calories à l'échangeur d'eau chaude sanitaire 18, auquel il est relié au moyen d'une résistance électrique 14 d'appoint, une pompe 15 et une vanne à trois voies directionnelle 16 lui permettant d'être également relié à un ballon de désaccouplage 27. L'échangeur du circuit d'eau chaude sanitaire 18 réchauffe l'eau d'un ballon d'eau chaude sanitaire 20. Le ballon d'eau chaude sanitaire 20 peut comporter en relais une résistance électrique 17 permettant d'augmenter la température de l'eau chaude sanitaire à une température supérieure à 65°C, pour des cycles antilégionellose.

Des panneaux solaires thermiques 24 peuvent fournir un supplément de l'eau chaude envoyée par une pompe 23 et une vanne à trois voies 22 soit dans un serpentin pour eau chaude sanitaire 21 arrivant dans le ballon d'eau chaude sanitaire 20, un circuit de décharge solaire comporte un serpentin de chauffage solaire 25 qui plonge, lui, dans le ballon de désaccouplage 27.

La pompe à chaleur peut par ailleurs alimenter, par le biais du ballon de désaccouplage 27, plusieurs autres circuits de chauffage. Une résistance électrique 28 peut fournir des calories supplémentaires en cas de nécessité, par exemple en cas de température extérieure basse. Dans ces conditions, une chaudière existante 40 peut envoyer un fluide chauffé, à l'aide d'une pompe 39 dans le ballon de désaccouplage 27. Les circuits 44 et 48 permettent, à l'aide des pompes 43, respectivement 49 et une vanne à trois voies 47, d'envoyer l'eau chaude en provenance du ballon de désaccouplage 27 dans les canaux d'un plancher chauffant ou dans des radiateurs de chauffage.

Dans l'exemple illustré à la figure 1, un échangeur piscine 31 de réchauffement de l'eau d'une piscine 30 est également prévu. L'échangeur piscine 31 passe à l'intérieur du ballon de désaccouplage 27 et permet, via une vanne trois voies 33 de chauffer la piscine 30. L'eau de la piscine 30 est envoyée par une pompe 34 via un filtre 35 dans l'échangeur piscine 31.

La pompe à chaleur 8 peut également rafraîchir un bâtiment en été lorsqu'elle est réversible. Elle est dans ce cas équipée d'un dispositif d'inversion du cycle du fluide frigorigène, tel qu'une vanne à quatre voies (non représentée sur les dessins). Le condenseur devient l'évaporateur de la pompe, l'évaporateur devient condenseur : la pompe à chaleur puise alors des calories dans le logement pour les rejeter à l'extérieur. Ceci est représenté sur la figure 1, par un circuit de climatisation 50 permettant, via une pompe 51, d'envoyer l'eau dans un réseau de climatisation dédié.

Une telle installation permet de subvenir aux besoins thermiques d'une habitation, mais nécessite des moyens de régulation et de commande adéquats. Pour ceci, une sonde extérieure 12 permet d'abord de lier la consigne de départ à la température extérieure et de commander, après calcul de la loi d'eau, le fonctionnement du système de chauffage ou de refroidissement. D'autres sondes de température, par exemple du type PT100, PT1000, par contact ou thermostatiques sont prévues pour mesurer la température du liquide du ballon d'eau chaude sanitaire 20, ou du ballon de désaccouplage 27, du panneau solaire thermique 24, de la piscine 30 ou la température d'ambiance mesurée dans zones différentes de l'habitation, par exemple T1 et T2. Ces données d'entrée sont reçues par un organe de commande qui effectue une gestion par régulation électronique commandant, en sortie, le fonctionnement : des pompes de l'installation, notamment de la pompe du système de chauffage, du plancher chauffant, de la chaudière, celle du panneau solaire, celle de la pompe à chaleur, ou celle du réseau de climatisation ; des vannes de l'installation, avec des actions tout ou rien, ou avec action proportionnelle sur vannes de mélange ou sur vannes départ plancher, etc. tel qu'il sera expliqué par la suite.

Selon l'invention, le système d'alimentation en énergie électrique 1 comprend un ensemble électronique comportant un convertisseur 3 et un organe de commande qui reçoit l'alimentation en énergie à partir de différentes sources d'énergie décentralisées sans production locale de CO₂ et la transmet au dispositif thermodynamique 2. Les sources d'énergie décentralisées sans production locale de CO₂ sont choisies parmi : des panneaux photovoltaïques 4, des éoliennes 6, des mini turbines 5, des piles à combustible 7.

Tel que représenté à la figure 1, un tel système fait alors appel à une production d'énergie électrique dite verte ou écologique A, utilisée pour obtenir une production thermodynamique, notamment de l'eau chaude ou de l'eau froide B, pour l'actionnement de la pompe à chaleur en production d'eau chaude, notamment avec un complément d'énergie électrique C, pouvant être reliée à une entrée ou sortie de réseau D, ainsi qu'à une production solaire complémentaire en eau chaude E.

Plus particulièrement selon l'invention, le convertisseur 3 intègre un organe de commande 11 du dispositif thermodynamique, notamment de la pompe à chaleur 8 et, par conséquent à l'installation dont elle fait partie.

Les entrées dans le circuit électrique de puissance du convertisseur 3 proviennent donc des sources d'énergie décentralisées sans production locale de CO₂ ci-dessus, les sorties pouvant alors être l'acheminement de l'énergie vers l'habitation, selon la flèche H, avec possibilité de stockage dans des batteries ou des super capacités, ou alors vers le réseau électrique de distribution, représenté par la flèche R. D'autres sorties permettront l'alimentation du dispositif thermodynamique 2, notamment une sortie en variation de vitesse du compresseur (monophasé ou triphasé) de la pompe à chaleur 8, des sorties en variation de vitesse de ventilateurs ou des pompes de circulation d'eau (monophasés ou triphasés), d'alimentation et commande des résistances de chauffage complémentaires 17 ou 28. L'énergie stockée dans les batteries ou super capacités peut, si besoin, être utilisée en entrée pour alimenter les dispositifs ci-dessus.

Selon l'invention, l'organe de commande 11 est intégré au convertisseur 3 et forment un module électronique de commande 9 qui réalise l'alimentation et la régulation du fonctionnement du dispositif thermodynamique 2. Ainsi, les entrées dans son circuit de commande proviennent des sondes de température internes, d'ambiance et externes, de température de l'eau dans le circuit des panneaux solaires. Les sorties du circuit de commande sont des signaux de commande destinées à l'actionnement des pompes ou des vannes ou électrovannes du dispositif thermodynamique 2, au circuit de décharge solaire associé aux panneaux solaires thermiques 24, à l'actionnement de la pompe de piscine 30, ainsi que celles permettant le contrôle de l'alimentation en énergie électrique provenant des sources d'énergie décentralisées sans production locale de CO₂, notamment de gestion de la mini turbine, , etc.

Les circuits électroniques de puissance et de commande de l'ensemble électronique sont illustrés par le schéma bloc de la figure 2. Ces circuits sont implantés sur une carte électronique. Dans ce schéma, par une flèche simple on a représenté des signaux mono directionnels, circulant d'un bloc à l'autre, dans le sens indiqué par la flèche, et par une flèche double les signaux bi directionnels pouvant donc circuler dans les deux sens entre les blocs qu'elles relient.

Par I et II on a représenté les signaux en courant reçus de d'un premier groupe (I) et un deuxième groupe (II) de panneaux photovoltaïques 4, signaux qui arrivent transformés par une interface 60 en des signaux XI, respectivement XII. L'interface 60 comprend des moyens de protection de mesures, un MPPT (permet de mesurer le point de puissance maximale d'un générateur électrique non linéaire) et des filtres. Les signaux XI et XII entrent chacun dans un convertisseur 65 de type DC/DC, moyennant un traitement par un processeur de signal numérique (ou DSP) 64, et débouchent dans un bus d'énergie 72.

Le signal en tension III en provenance d'une éolienne 6 passe par une interface 61 d'adaptation de l'éolienne qui envoie un signal sortant XIII dans un convertisseur 67 de type AC/DC ou DC/DC, en fonction du type de courant électrique produit par l'éolienne, moyennant un traitement par un processeur de signal numérique (ou DSP) 66, signal XIII qui arrive également sur le bus d'énergie 72.

Le signal en tension IV reçu d'une pile à combustible 7 passe par une interface 62 d'adaptation de pile à combustible qui envoie un signal sortant XIV dans un convertisseur 69 de type DC/DC moyennant un traitement par un processeur de signal numérique (DSP) 68. Le signal sortant XIV débouche sur le bus d'énergie 72.

De manière analogue, le signal en tension V en provenance d'une mini turbine passe par une interface 63 d'adaptation de turbine qui envoie un signal sortant XV dans un convertisseur 71 de type AC/DC ou DC/DC, en fonction du type de courant électrique produit par la mini turbine, via un processeur de signal numérique (ou DSP) 70, signal XV qui arrive également sur le bus d'énergie 72.

Tel que visible à la figure 2, les signaux de sortie du bus d'énergie 72 peuvent être dirigés vers une partie du réseau d'électricité R, notamment le signal VI par l'intermédiaire d'un convertisseur réversible DC/AC 75 moyennant un processeur de signal numérique (DSP) 74, relié à un module de protection 76 avant la connexion au réseau R.

Un signal VII sortant du bus d'énergie 72 passe dans une partie onduleur comportant notamment un onduleur 78, moyennant un traitement par processeur de signal numérique (DSP) 77 , un filtre 79 pour alimenter en variation de fréquence le compresseur 80 de la pompe à chaleur 8 ou des ventilateurs 81 du système de ventilation (ou d'envoi d'air pulsé) associé à la pompe à chaleur 8.

Un signal VIII arrive du bus d'énergie 72 dans une zone de stockage d'énergie, plus particulièrement via un chargeur/déchargeur 83, moyennant un traitement par un processeur de signal numérique 82 dans un dispositif de stockage d'énergie, réalisé sous forme des batteries 84 ou des super capacités 85. Ce système est réversible.

Un signal IX du bus d'énergie peut alimenter une résistance de chauffe 17 associée à l'échangeur 10, un autre signal X peut, lui, alimenter une résistance de chauffe supplémentaire 28 associée à l'évaporateur 38.

Le bus d'énergie 72 permet de fournir une alimentation auxiliaire 73 du système. Un module 87 permet d'effectuer des mesures au niveau du bus d'énergie 72 et d'en informer un système microcontrôleur 90.

Un bus de commande 88 à 16 entrées relie les signaux digitaux bidirectionnels a, b, c, d, e, f, g, h, j, k, l, m et n à un système microcontrôleur 90.

En plus des signaux I à XV précédemment décrits, un signal XVI peut arriver au système microcontrôleur 90 en provenance d'un module d'entrées analogiques 95. Le module d'entrées analogiques 95 reçoit les signaux analogiques e₁ à eₙ transmis par les diverses sondes du système. Ainsi, ces entrées informent de la température de l'eau au niveau des panneaux solaires thermiques 24, de l'air extérieur à l'habitation, de la température d'ambiance d'une ou plusieurs zones à l'intérieur de l'habitation, de la température du ballon d'eau chaude sanitaire 20, de celle du ballon de désaccouplage 27, de l'eau de la piscine 30 ; une autre entrée peut informer de l'état des batteries de stockage.

Le système microcontrôleur 90 comprend une mémoire et une unité de calcul permettant, en fonction des signaux d'entrée, d'envoyer des signaux de commande à un module de sorties 97 muni de plusieurs sorties s₁ à sₙ, de préférence 16 sorties, qui sont des sorties statiques ou relais. Les signaux de sortie s₁ à sₙ sont de type numérique, soit du type tout ou rien soit du type à action proportionnelle et sont destinés à la commande des différents composants de l'installation. Ainsi, les signaux de sortie commandent les pompes de l'installation, notamment celle du ballon d'eau chaude sanitaire 20, à celle du chauffage 48 ou du plancher chauffant 44, ou celle de la chaudière 40, ou encore celle du panneau solaire thermique 24 ou du climatiseur 50 ou celle de la piscine 30 ; d'autres signaux sont destinés à la commande des vannes à trois voies, ou des évaporateurs. D'autres sorties du module 97 commandent la décharge solaire ou la mini turbine, voire la zone de stockage de l'énergie.

Le système microcontrôleur 90 est relié à une carte mémoire 91 du type SD ou MMc permettant d'enregistrer certaines informations. Il peut également être relié à un ordinateur 92 qui permet de télécharger un programme. Il est de préférence connecté à un afficheur 93 de type LCD permettant l'affichage de l'état du système, de certains paramètres, etc.

Le système microcontrôleur 90 peut également communiquer, soit en signal d'entrée, soit de sortie, via plusieurs réseaux de communication à distance, ou locaux, tels : un réseau de téléphonie mobile de type 3G 98, via un réseau des courants porteurs en ligne CPL 99, via un réseau téléphonique commuté RTC 100, via un réseau WIFI 101, soit via un réseau de téléphonie mobile de type GPRS 102 ou encore par un réseau de type ETHERNET 103.

D'autres variantes et modes de réalisation de l'invention peuvent être envisagés sans sortir du cadre de l'invention telle que délimitée dans les revendications.

## Revendications

1. Système d'alimentation et de gestion d'énergie électrique (1) pour un dispositif thermodynamique (2) à partir de sources d'énergie différentes comportant un ensemble électronique comprenant un convertisseur d'énergie (3) configuré pour être relié auxdites sources d'énergie pour convertir une énergie électrique en provenance de la ou des sources d'énergie en énergie électrique et un organe de commande (11) du dispositif thermodynamique (2), le dispositif thermodynamique étant une pompe à chaleur (8), l'organe de commande (11) étant intégré au convertisseur d'énergie (3) et formant ensemble un module électronique de commande (9) configuré pour être relié au dispositif thermodynamique (2) et ledit module électronique de commande (9) étant configuré pour recevoir une alimentation d'au moins une source d'énergie décentralisée sans production locale de CO₂, ledit module électronique de commande (9) recevant des signaux (I,II,III,IV,V) en provenance d'au moins une source d'énergie décentralisée sans production locale de CO₂ (4,5,6,7), **caractérisé en ce que** les signaux qui sont transformés par une interface (60,61, 62, 63) entrent dans un convertisseur (64,67,69,71) de type AC/DC ou DC/DC, moyennant un traitement par processeur de signal numérique (65,66,68,70), et débouchent dans un bus d'énergie (72), les signaux (VII) sortant dudit bus d'énergie (72) étant dirigés au moins vers un onduleur (78) pour alimenter en variation de fréquence le compresseur (80) de la pompe à chaleur (8) ou des ventilateurs (81) du système de ventilation de la pompe à chaleur (8).

2. Système selon la revendication 1, **caractérisé en ce que** les signaux (VI,VIII,IX,X) sortant du bus d'énergie (72) sont dirigés en outre vers un réseau d'électricité (R), moyennant un convertisseur réversible DC/AC (75), ou, moyennant un chargeur/déchargeur (83) dans une zone de stockage d'énergie (84,85), ou aux bornes d'alimentation d'au moins une résistance de chauffe (17,28).

3. Système selon l'une des revendications 1 ou 2, **caractérisé en ce qu'**il comprend un bus de commande (88) reliant les signaux digitaux bidirectionnels (a,b,c,d,e) des interfaces (60,61,62,63), les signaux digitaux bidirectionnels (f,g,h,j,k) des convertisseurs (65,67,69,71), le signal digital bidirectionnel (I) du convertisseur réversible (75), le signal digital bidirectionnel (m) de l'onduleur (78), le signal digital bidirectionnel (n) du chargeur/déchargeur (83) à un système microcontrôleur (90).

4. Système selon la revendication 3, **caractérisé en ce que** le système microcontrôleur (90) reçoit des signaux analogiques (e₁ à eₙ) en provenance de diverses sondes du système.

5. Système selon la revendication 4, **caractérisé en ce que** le système microcontrôleur (90) comprend une mémoire et une unité de calcul permettant, en fonction de signaux d'entrée, d'envoyer des signaux de commande à un module de sortie (97) muni de plusieurs sorties (si à sₙ) destinés à la commande des différents composants d'une installation comportant au moins le dispositif thermodynamique (2).

6. Système selon la revendication 1, **caractérisé en ce que** les sources d'énergie décentralisées sans production locale de CO₂ sont choisies parmi : les panneaux photovoltaïques (4), les éoliennes (6), les piles à combustible (7), les mini turbines hydrauliques (5).

7. Système selon l'une des revendications précédentes, **caractérisé en ce que** ledit organe de commande (11) comprend un système de régulation d'au moins un poste utilisateur choisi parmi : un climatiseur, un dispositif de chauffage thermodynamique, un dispositif de chauffage solaire, un dispositif de stockage d'énergie, une chaudière, un réservoir d'eau chaude sanitaire, un dispositif de contrôle de la température d'eau d'une piscine.

## Patentansprüche

1. System zur Versorgung mit und Verwaltung von elektrischer Energie (1) für eine thermodynamische Vorrichtung (2) ausgehend von unterschiedlichen Energiequellen, das eine Elektronikbaugruppe umfasst, die einen Energiewandler (3) umfasst, der konfiguriert ist, um mit den Energiequellen verbunden zu sein, um eine elektrische Energie, die von der oder mehreren Energiequellen kommt, in elektrische Energie umzuwandeln, und ein Steuerorgan (11) der thermodynamischen Vorrichtung (2), wobei die thermodynamische Vorrichtung eine Wärmepumpe (8) ist, das Steuerorgan (11) in den Energiewandler (3) integriert ist und damit gemeinsam ein elektronisches Steuermodul (9) bildet, das konfiguriert ist, um mit der thermodynamischen Vorrichtung (2) verbunden zu sein, und wobei das elektronische Steuermodul (9) konfiguriert ist, um eine Versorgung von mindestens einer dezentralen Energiequelle ohne lokale CO₂-Produktion zu empfangen, wobei das elektronische Steuermodul (9) Signale (I, II, III, IV, V) empfängt, die von mindestens einer dezentralen Energiequelle ohne lokale CO₂-Produktion (4, 5, 6, 7) kommen, **dadurch gekennzeichnet, dass** die Signale, die von einer Schnittstelle (60, 61, 62, 63) umgewandelt werden, in den Wandler (64, 67, 69, 71) vom Typ AC/DC oder DC/DC mittels einer Verarbeitung durch digitalen Signalprozessor (65, 66, 68, 70) eintreten und in einen Energiebus (72) münden, wobei die Signale (VII), die aus dem Energiebus (22) austreten, mindestens zu einem Wechselrichter (78) gelenkt werden, um in Frequenzvariation den Kompressor (80) der Wärmepumpe (8) oder Gebläse (81) des Belüftungssystems der Wärmepumpe (8) zu versorgen.

2. System nach Anspruch 1, **dadurch gekennzeichnet, dass** die Signale (VI, VIII, IX, X), die aus dem Energiebus (72) austreten, weiter zu einem Stromnetz (R) mittels eines umkehrbaren DC/AC-Wandlers (25) gelenkt werden, oder mittels eines Laders/Entladers (83) in eine Energiespeicherzone (84, 85) oder zu den Versorgungsklemmen mindestens eines Heizwiderstands (17, 28).

3. System nach einem der Ansprüche 1 oder 2, **dadurch gekennzeichnet, dass** es einen Steuerbus (88) umfasst, der die bidirektionalen digitalen Signale (a, b, c, d, e) der Schnittstellen (60, 61, 62, 63), die bidirektionalen digitalen Signale (f, g, h, j, k) der Wandler (65, 67, 69, 71), das bidirektionale digitale Signal (I) des umkehrbaren Wandlers (75), das bidirektionale digitale Signal (m) des Wechselrichters (78), das bidirektionale digitale Signal (n) des Laders/Entladers (83) mit einem Mikrocontrollersystem (90) verbindet.

4. System nach Anspruch 3, **dadurch gekennzeichnet, dass** das Mikrocontrollersystem (90) analoge Signale (e₁ bis eₙ), die von unterschiedlichen Sonden des Systems kommen, empfängt.

5. System nach Anspruch 4, **dadurch gekennzeichnet, dass** das Mikrocontrollersystem (90) einen Speicher und eine Recheneinheit umfasst, die es in Abhängigkeit von Eingangssignalen erlaubt, Steuersignale zu einem Ausgangsmodul (97) zu senden, das mit mehreren Ausgängen (si bis sₙ) versehen ist, die zum Steuern der unterschiedlichen Bauteile einer Anlage bestimmt sind, die mindestens die thermodynamische Vorrichtung (2) umfasst.

6. System nach Anspruch 1, **dadurch gekennzeichnet, dass** die dezentralen Energiequellen ohne lokale CO₂-Produktion ausgewählt sind aus: den fotovoltaischen Platten (4), den Windkraftanlagen, den Brennstoffzellen (7), den hydraulischen Miniturbinen (5).

7. System nach einem der vorstehenden Ansprüche, **dadurch gekennzeichnet, dass** das Steuerorgan (11) ein System zum Regulieren mindestens eines Benutzerpostens umfasst, der ausgewählt ist aus: einer Klimaanlage, einer thermodynamischen Heizvorrichtung, einer Solarheizvorrichtung, einer Energiespeichervorrichtung, einem Heizkessel, einem Speicher für warmes Brauchwasser, einer Vorrichtung zum Steuern der Wassertemperatur eines Schwimmbeckens.

## Claims

1. System for supplying and managing electric energy (1) for a thermodynamic device (2) from different energy sources comprising an electronic assembly including an energy converter (3) configured to be connected to said energy sources for converting an electric energy from the energy source or sources into electric energy and a controller (11) of the thermodynamic device (2), the thermodynamic device being a heat pump (8), the controller (11) being integrated into the energy converter (3) and together forming an electronic control module (9) configured to be connected to the thermodynamic device (2) and said electronic control module (9) being configured to receive a supply from at least one decentralised energy source without local production of CO₂, said electronic control module (9) receiving signals (I, II, III, IV, V) from at least one decentralised energy source without local production of CO₂, **characterised in that**
the signals which are transformed by an interface (60, 61, 62, 63) enter an AC/DC or DC/DC type converter (64, 67, 69, 71), by means of a digital signal processor (65, 66, 68, 70) processing, and exit into an energy bus (72)
the signals (VII) leaving said energy bus (72) being directed at least to an inverter (78) for supplying frequency variation to the compressor (80) of the heat pump (8) or to fans (81) of the ventilation system of the heat pump (8).

2. System according to claim 1, **characterised in that** the signals (VI, VIII, IX, X) leaving the energy bus (72) are additionally fed to a power supply network (R) by means of a DC/AC reversible converter (75) or by means of a charger/discharger (83) in an energy storage area (84, 85) or to the supply terminals of at least one heating resistance (17, 28).

3. System according to one of claims 1 or 2, **characterised in that** it comprises a control bus (88) connecting the bidirectional digital signals (a, b, c, d, e) of the interfaces (60, 61, 62, 63), the bidirectional digital signals (f, g, h, j, k) of the converters (65,67,69,71), the bidirectional digital signal (I) of the reversible converter (75), the bidirectional digital signal (m) of the inverter (78), the bidirectional digital signal (n) of the charger/discharger (83) and a microcontroller system (90).

4. System of claim 3, **characterised in that** the microcontroller system (90) receives analogue signals (e₁ to eₙ) from various probes in the system.

5. System according to claim 4, **characterized in that** the microcontroller system (90) comprises a memory and a calculation unit allowing, according to input signals, to send control signals to an output module (97) provided with several outputs (s₁ to sₙ) for the control of the various components of an installation comprising at least the thermodynamic device (2).

6. System according to claim 1, **characterised in that** the decentralised energy sources without local CO₂ production are selected from: photovoltaic panels (4), wind turbines (6), fuel cells (7), mini hydro turbines (5).

7. System according to one of the preceding claims, **characterised in that** said controller (11) comprises a system for regulating at least one user station selected from: an air conditioner, a thermodynamic heating device, a solar heating device, an energy storage device, a boiler, a domestic hot water tank, a device for controlling the water temperature of a swimming pool.
